# EUROPÄISCHE PATENTSCHRIFT

(11) **EP 0 813 452 B1**
(45) Veröffentlichungstag und Bekanntmachung des Hinweises auf die Patenterteilung: **09.12.1998**
(21) Anmeldenummer: 96903920.5
(22) Anmeldetag: 23.02.1996
(51) Int. Cl.: B05D 5/08, F16C 33/20, C10M 173/00, C08K 3/08

(54) **VERFAHREN ZUR HERSTELLUNG EINES VERBUNDMATERIALS FÜR GLEITLAGER MIT EINER KUNSTSTOFFGLEITSCHICHT SOWIE EINE HIERFÜR GEEIGNETE PASTE**
METHOD OF PRODUCING A COMPOSITE MATERIAL FOR SLIDE BEARINGS WITH A PLASTICS SLIDING LAYER AND A PASTE SUITABLE THEREFOR
PROCEDE DE PRODUCTION D'UN MATERIAU COMPOSITE POUR PALIERS LISSES COMPORTANT UNE COUCHE PLASTIQUE DE GLISSEMENT, ET PATE CONVENANT A CET EFFET

(30) Priorität: 01.03.1995 DE 19507045
(43) Veröffentlichungstag der Anmeldung: 29.12.1997
(73) Patentinhaber: GLYCO-METALL-WERKE Glyco B.V. & Co. KG, 65201 Wiesbaden (DE)
(72) Erfinder: ADAM, Achim, D-64569 Nauheim (DE); MANN, Horst, D-65187 Wiesbaden (DE); FUCHSBERGER, Stefan, D-65343 Eltville (DE)
(86) Internationale Anmeldenummer: DE9600344
(87) Internationale Veröffentlichungsnummer: WO9626793

(56) Entgegenhaltungen:
- EP-A- 0 043 182
- EP-A- 0 395 130
- EP-A- 0 430 324
- DE-A- 4 105 657
- DE-B- 1 132 710
- FR-A- 1 348 415
- FR-A- 1 398 384
- FR-A- 2 563 468
- US-A- 4 208 472

## Beschreibung

Die vorliegende Erfindung betrifft ein Verfahren zur Herstellung eines Verbundmaterials für Gleitlager mit einer Kunststoffgleitschicht gemäß dem Oberbegriff des Anspruchs 1, sowie eine von organischen Lösungsmitteln freie Paste, die bei der Herstellung benötigt wird. Die Erfindung betrifft auch die Verwendung des Verbundmaterials.

Selbstschmierende Lagerwerkstoffe sind bereits bekannt. In ihrer gebräuchlichsten Form bestehen sie aus einer auf einem Stahlträger aufgebrachten, porösen Sinterschicht aus Zinn- oder Bleibronzelegierungen. Auf die poröse Sinterschicht sind Mischungen aus Fluorpolymeren mit verschiedenen Füllstoffen so eingearbeitet, daß sie eine Schicht von 10 - 30µm auf dem Sintergerüst bilden.

Ein Verfahren zur Herstellung selbstschmierender Lager wird in der DE-PS-1 132 710 beschrieben. Bei diesem Verfahren wird eine Paste, die aus einer PTFE-Dispersion (Polytetrafluorethylen-Dispersion) und Füllstoffen hergestellt ist, unter Druck in Hohlräume einer porösen Bronzeschicht eingebracht und das Metall anschließend gesintert. Die DE-PS-1 132 710 beschreibt auch die Herstellung einer PTFE-Füllstoffpaste, wobei die Füllstoffe mit einer PTFE-Dispersion in einer Konzentration zwischen 5 und 60% gemischt werden, worauf anschließend mit Hilfe eines Salzes, das mit dem die Dispersion stabilisierenden, ionischen Netzmittel eine unlösliche Verbindung bildet, die Koagulation des PTFE unter homogener Einlagerung der zugesetzten Füllstoffe herbeigeführt wird. Es wird erwähnt, daß bei diesem Verfahren verflüchtigbare, organische Lösungsmittel, z.B. Toluol, und zusätzlich ggf. eine oberflächenaktive Substanz, wie Ethylphenylpolyglycolether oder ein Fettalkoholsulfonat, eingesetzt werden können. Die oberflächenaktiven Substanzen werden zur besseren Benetzung und damit homogeneren Einmischbarkeit der Füllstoffe verwendet. Die organischen Lösungsmittel werden eingesetzt, um die gewünschte Pastenkonsistenz zu erlangen, die die erforderlichen geringen Deckschichtdicken von 10 bis 30µm am Fertigteil ermöglicht.

Aus der FR-A-2563468 ist ein Verfahren bekannt, bei dem zunächst ein PTFE-Band hergestellt wird, das auf der einen Seite ein Material aus biaxial orientiertem Polyethylenteraphthalat und auf der anderen Seite ein Filterpapier aufweist. Dieses PTFE-Band wird aus einer von Lösungsmitteln freien Paste aus PTFE und Füllstoffen hergestellt, wobei eine wässrige Dispersion zum Einsatz kommt. Ein Teil des Wassers wird bereits bei der Bandherstellung mittels einer Vakuumpumpe durch das Filterpapier abgesaugt. Vor dem Aufwickeln des so hergestellten Bandes wird das Filterpapier wieder abgezogen, weil die Paste sich durch den Wasserentzug bereits weitgehend verfestigt hat. Das Band wird auf eine poröse Sinterschicht mit der freien Seite aufgebracht und das Stützmaterial hierbei gleichzeitig abgezogen. Der Wassergehalt des PTFE-Materials ist dann bereits äußerst gering. Die resultierende PTFE-Gleitschicht ist beispielsweise 0,15 mm dick.

Aus der DE 41 05 657 A1 ist ein Gleitmaterial bekannt, das ein Stützmetall und eine darauf aufgebrachte poröse Metallschicht aufweist, in deren Oberfläche eine Imprägnierungsbeschichtungsmasse eingebracht wird. Diese Imprägnierungsmasse besteht aus PFA, EPE und FEP sowie Blei und zum Rest aus PTFE. Für die angestrebte Verbesserung der Reibung und Verschleißbeständigkeit sowie die Kavitationsbeständigkeit kommt es auf die Polymerlegierung und das Bleipulver an. Ob die verwendete Imprägnierungsmasse lösungsmittelfrei ist oder nicht, geht aus der DE 41 05 657 A1 nicht hervor.

Die EP 0 430 324 A1 beschreibt die Herstellung eines Kunststoffmaterials, das aus PTFE, Bronze, Graphit und PVDF besteht. Das PVDF-Pulver wird mit weiteren Komponenten gemischt und als 2 mm dicke Streifen extrudiert, woraus Granulat hergestellt wird. Aus diesem Granulat wird anschließend ein Band gefertigt, das auf die poröse Bronzeschicht des Gleitlagermaterials aufgebracht wird.

Die US-4,208,472 beschreibt eine Imprägnierungspaste, die Lösungsmittel enthält.

Die EP 0 043 182 A1 befaßt sich mit Schmiermittelzusammensetzungen im Zusammenhang mit der Herstellung von metallischen Behältern. Die Herstellung von Gleitlagern wird nicht erwähnt.

In hochbelasteten Gleitlagern entstehen häufig durch Kavitation Hohlräume, die nach kurzer Zeit unter Freigabe von Energie wieder zerplatzen. Diese freiwerdende Energie führt zu einer örtlichen Zerstörung des Werkstoffes, wodurch die Lebensdauer der aus dem Werkstoff bestehenden Bauteile erheblich verringert wird.

Aufgabe der vorliegenden Erfindung ist es daher, ausgehend von der FR-A- 2563468, eine Paste und ein Verfahren zur Herstellung von Verbundmaterialien für Gleitlager mit einer Kunststoffgleitschicht bereitzustellen, mit dem fehlerfreie Kunststoffgleitschichten, insbesondere von weniger als 20µm hergestellt werden können, die eine längere Lebensdauer und eine verbesserte Kavitationsbeständigkeit aufweisen.

Diese Aufgabe wird durch ein Verfahren zur Herstellung eines Verbundmaterials für Gleitlager mit einer Kunststoffgleitschicht dadurch gelöst, daß eine von organischen Lösungsmitteln freie Paste verwendet wird, für deren Herstellung ein nichtionisches Netzmittel eingesetzt wird, wobei die Kunststoffgleitschicht eine Dicke von ≤ 30µm aufweist.

Zweckmäßige Weiterbildungen der Erfindung sind in den abhängigen Ansprüchen beschrieben.

Vorzugsweise wird zur Herstellung der Paste eine Dispersion, die bis zu 60 Gew.-% einen mit einem ionischen Netzmittel versetzten Fluorthermoplasten und außerdem Wasser enthält mit 5 bis 50 Vol.-% Füllstoff, bezogen auf das Volumen des Fluorthermoplasten, mit 0,1 bis 1,5 Gew.% des nichtionischen Netzmittels, bezogen auf die Menge des Fluorthermoplasten, und einem Überschuß an Wasser gemischt, anschließend mit einem Fällungsmittel gefällt und das überstehende Wasser entfernt, die Paste auf eine gesinterte, poröse Metallschicht, die ein Stützmetall bedeckt, aufgebracht wird, und das so erzeugte Mehrschichtmaterial anschließend gesintert. Der Anteil des nichtionischen Netzmittels in der Dispersion liegt vorzugsweise in dem Bereich von 1 bis 5 Gew.-% bezogen auf die Menge des Fluorthermoplasten.

Durch die Verwendung einer auf die eingesetzte Fluorthermoplast-Dispersion genau abgestimmte Menge eines nichtionischen Netzmittels wird nach dem Fällungsvorgang die Wasserabgabe der Paste verlangsamt. In einem engen Bereich der Gesamtkonzentration an nichtionischem Netzmittel, die zwischen 0,1 und 1,5 Gew.-%, bevorzugt 0,1 bis 1,0 Gew.-%, bezogen auf die Menge des Fluorthermoplasten, liegt, wird nach der Koagulation des Fluorthermoplasten während des Rührvorgangs ein Zustand durchlaufen, der es ermöglicht, die Paste fehlstellenfrei in jeder gewünschten Dicke auf den porösen Metalluntergrund aufzubringen. Als nichtionisches Netzmittel wird bevorzugt ein Alkylpolyglycolether eingesetzt. Es ist aber auch der Einsatz von Alkylarylpolyglycolether, Alkylaminopolyglycolether, Acylpolyglycolether, Alkylaminoxiden oder von Fettsäureestern von Polyalkoholen möglich.

Die Verwendung ionischer, oberflächenaktiver Substanzen ist für diese Zwecke ungeeignet, da diese beim Fällungsvorgang durch Bildung unlöslicher Verbindungen desaktiviert werden und somit die Pastenkonsistenz nicht mehr beeinflussen können.

Bei den Fluorthermoplasten kann es sich zum Beispiel um PTFE (Polytetrafluorethylen), PFA (Poly(tetrafluorethylen-co-perfluorvinylmethylether)), FEP (Poly(tetrafluorethylen-co-hexafluorpropylen)), ETFE (Poly(ethylen-alt-tetrafluorethylen)) oder ein Gemisch aus diesen handeln. Erfindungsgemäß wird bevorzugt PTFE eingesetzt. Das ionische Netzmittel, das in der Dispersion enthalten ist, ist zum Beispiel Natriumlaurylsulfat. Beispiele für Füllstoffe sind Molybdändisulfid, Blei, Bleioxid, Graphit, Koks, Ruß, Bronze, Kunststoffe, sowie Faserstoffe und Gemische aus diesen Materialien. Als Stützmaterial kann Stahl, Bronze oder Aluminium verwendet werden, auf das eine poröse Metallschicht aufgebracht ist, die bevorzugt aus Bronze besteht.

Ein besonderer Vorteil dieses Verfahrens ist es, daß die Verwendung von organischen Lösungsmitteln unterbleibt, wodurch die gesundheitlichen Risiken für die in der Fertigung Beschäftigten und eine erhöhte Brandgefahr erheblich reduziert werden. Dies bedeutet auch einen erheblich geringeren Aufwand bei der sicherheitstechnischen Gestaltung der Produktionsanlage und der Arbeitsplätze.

Im folgenden werden nun anhand eines Beispiels Verbundmaterialien, die mit unterschiedlichen PTFE-Füllstoffmischungen beschichtet worden sind, untersucht, wobei unterschiedliche Füllstoffe und Netzmittel eingesetzt werden.

### Beispiel 1

Eine Paste wird hergestellt, indem 161 Wasser, 50g Alkylpolyglycolether und 5kg Molybdändisulfid mit 21,6kg einer 40%-igen PTFE-Dispersion homogen vermischt werden und anschließend mit 400g einer 20%-igen Aluminiumnitratlösung gefällt wird. Nach einer Absitzzeit von 5 Minuten wird das überstehende Wasser entfernt und die entstandene Paste mit einer Schichtdicke von 15µm auf das Metallband aufgetragen; schließlich wird das Mehrschichtmaterial in herkömmlicher Weise gesintert und kalibriert. Es wird ein Verbundwerkstoff (1) gemäß der Erfindung erhalten.

Zur Verdeutlichung des erfindungsgemäßen Effektes werden drei weitere Verbundwerkstoffe auf Pastenbasis hergestellt.

### Beispiel 2

Analog zu Beispiel 1 wird ein Verbundwerkstoff (2) hergestellt. Die zur Herstellung benötigte Paste enthält 20 Vol.-% MoS₂, bezogen auf das Volumen von PTFE sowie Toluol und das ionische Netzmittel Natriumlaurylsulfat. Es wird kein nichtionisches Netzmittel zugefügt.

### Beispiel 3

Analog zu Beispiel 1 wird ein erfindungsgemäßer Verbundswerkstoff (3) hergestellt, wobei die Paste PTFE mit 20 Vol.-% Pb, bezogen auf das Volumen des PTFE, und das nichtionische Netzmittel Alkylpolyglycolether enthält. Es wird kein organisches Lösungsmittel eingesetzt.

### Beispiel 4

Analog zu Beispiel 3 wird ein dem Stand der Technik entsprechender Verbundwerkstoff (4) hergestellt, wobei kein nichtionisches Netzmittel eingesetzt wird, jedoch Toluol und Natriumlaurylsulfat der Paste zugegeben werden.

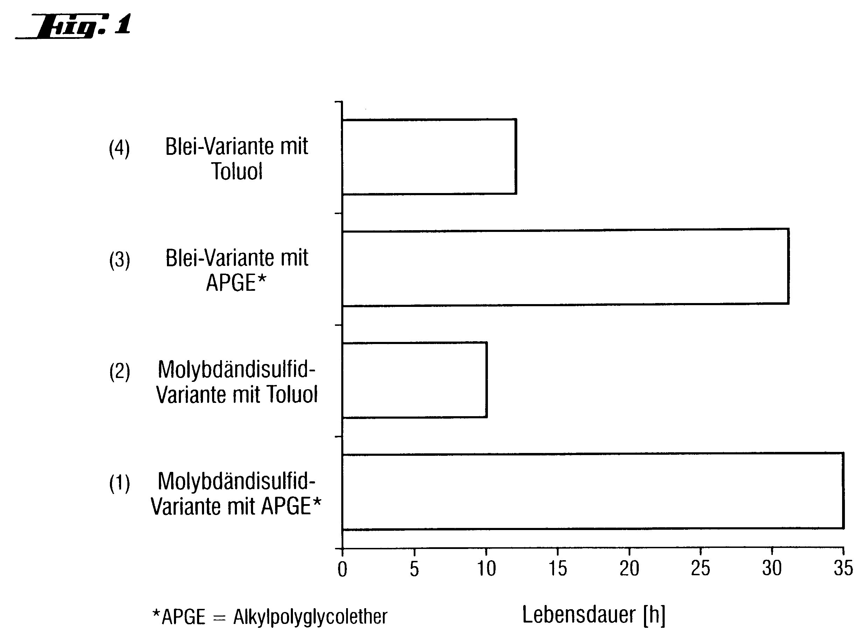

In einem Vergleichstest werden anschließend die Verbundwerkstoffe auf ihre Kavitationsbeständigkeit geprüft. Der Test wird an 10mm breiten Buchsen mit einem Innendurchmesser von 22mm in Stoßdämpfern unter einer Seitenlast von 2000 N und einer rampenförmigen Axialbewegung von 40mm Amplitude und 1Hz durchgeführt. In Fig. 1 sind die Ergebnisse dieser Untersuchungen aufgeführt.

Es zeigt sich, daß die Kavitationsbeständigkeit der erfindungsgemäßen Verbundwerkstoffe gegenüber den herkömmlichen Werkstoffen wesentlich verbessert ist.

Die Resultate werden auf eine vollständigere Verdrängung der Pastenfeuchtigkeit und damit eine effektivere Verdichtung der Kunststoffmasse während des Einwalzprozesses zurückgeführt. Beim Verdampfen des Restwassers wird weniger Porösität in der Kunststoffschicht erzeugt als bei zusätzlichen Gehalten an organischen Lösungsmitteln, und damit durch einen höheren Kontaktflächenanteil der PTFE-Partikel ein vollständigerer Sintervorgang ermöglicht. In Übereinstimmung hiermit weisen abgeschälte Oberflächenproben eine deutlich erhöhte Zähigkeit PTFE-Partikel ein vollständigerer Sintervorgang ermöglicht. In Übereinstimmung hiermit weisen abgeschälte Oberflächenproben eine deutlich erhöhte Zähigkeit auf. Die so verstärkte, schichtinterne Bindung hemmt bei starker Kavitationsbeanspruchung, wie im Stoßdämpfer oder auch in Hydraulikpumpen, die Herauslösung von Oberflächenfragmenten und erhöht damit die Zuverlässigkeit der Bauteile.

Neben den klassischen schmierungslosen Anwendungsgebieten, wie Lagern, können diese Verbundwerkstoffe infolgedessen insbesondere auch in Zahnradpumpen und Stoßdämpfern zum Einsatz kommen.

## Patentansprüche

1. Verfahren zur Herstellung eines Verbundmaterials für Gleitlager,
wobei für die Ausbildung der Kunststoffgleitschicht eine aus einer Kunststoffdispersion und Füllstoffen hergestellte Paste unmittelbar auf eine gesinterte, poröse Metallschicht aufgebracht wird, dadurch gekennzeichnet,
daß eine von organischen Lösungsmitteln freie Paste verwendet wird, für deren Herstellung ein nicht ionisches Netzmittel eingesetzt wird, wobei die Kunststoffgleitschicht eine Dicke von ≤ 30 µm aufweist.

2. Verfahren nach Anspruch 1, dadurch gekennzeichnet, daß zur Herstellung der Paste eine Dispersion, die bis zu 60 Gew.-% einen mit einem ionischen Netzmittel versetzten Fluorthermoplasten und Wasser enthält, mit 5-50 Vol.-% Füllstoff, bezogen auf das Volumen des Fluorthermoplasten, und mit 0,1 bis 1,5 Gew.-% des nicht ionischen Netzmittels, bezogen auf die Menge des Fluorthermoplasten, und einem Überschuß an Wasser vermischt wird, anschließend mit einem Fällungsmittel gefällt wird und das überstehende Wasser entfernt wird, die Paste dann auf die gesinterte, poröse Metallschicht, die ein Stützmetall bedeckt, aufgebracht wird, und das Mehrschichtmaterial anschließend gesintert wird.

3. Verfahren nach Anspruch 2, dadurch gekennzeichnet, daß der Fluorthermoplast zu 1 bis 5 Gew.-%, bezogen auf die Menge des Fluorthermoplasten, mit einem ionischen Netzmittel versetzt ist.

4. Verfahren nach einem der Ansprüche 1-3, dadurch gekennzeichnet, daß als Fluorthermoplast PTFE, PFA, FEP, ETFE oder ein Gemisch, das aus diesen Polymeren zusammengesetzt ist, eingesetzt wird.

5. Verfahren nach einem der Ansprüche 1-4, dadurch gekennzeichnet, daß als nichtionisches Netzmittel ein Alkylpolyglycolether, ein Alkylarylpolyglycolether, ein Acylpolyglycolether, ein Alkylaminoxid oder ein Fettsäureester von einem Polyalkohol eingesetzt wird.

6. Verfahren nach einem der Ansprüche 1 bis 5, dadurch gekennzeichnet, daß der Anteil an nichtionischem Netzmittel zwischen 0,1 Gew.-% und 1,0 Gew.-%, bezogen auf die Menge Fluorthermoplasten, liegt.

7. Verfahren nach einem der Ansprüche 1 bis 6, dadurch gekennzeichnet, daß als Füllstoffe Molybdändisulfid, Blei, Bleioxid, Graphit, Koks, Ruß, Bronze, Kunststoffe, Faserstoffe oder ein Gemisch der genannten Materialien eingesetzt werden.

8. Verfahren nach einem der Ansprüche 1 bis 7, dadurch gekennzeichnet, daß die Füllstoffe in einer Menge von 15 bis 40 Vol.-%, bezogen auf das Volumen des Fluorthermoplasten, zugegeben werden.

9. Verfahren nach einem der Ansprüche 1 bis 8, dadurch gekennzeichnet, daß als Stützmetalle Stahl, Bronze oder Aluminium eingesetzt werden.

10. Verfahren nach einem der Ansprüche 1 bis 9, dadurch gekennzeichnet, daß für das poröse Metall Bronze eingesetzt wird.

11. Verwendung eines Verbundmaterials, das gemäß einem der Ansprüche 1 bis 10 hergestellt ist, in Stoßdämpfern und Zahnradpumpen.

12. Von organischen Lösungsmitteln freie Paste für die Herstellung einer Kunststoffgleitschicht für Gleitlager, dadurch gekennzeichnet, daß sie ein nichtionisches Netzmittel enthält.

13. Paste nach Anspruch 12, dadurch gekennzeichnet, daß sie einen mit einem ionischen Netzmittel versetzten Fluorthermoplasten, Füllstoff in einem Anteil von 5-50 Vol.%, bezogen auf das Volumen des Fluorthermoplasten, und das nichtionische Netzmittel in einem Anteil von 0,1 bis 1,5 Gew.%, bezogen auf die Menge des Fluorthermoplasten, enthält.

14. Paste nach Anspruch 13, dadurch gekennzeichnet, daß der Fluorthermoplast mit 1 bis 5 Gew.-% ionischem Netzmittel, bezogen auf die Menge des Fluorthermoplasten, versetzt ist.

15. Paste nach einem der Ansprüche 12 bis 14, dadurch gekennzeichnet, daß es sich bei dem nichtionischen Netzmittel um einen Alkylpolyglycolether, einen Alkylarylpolyglycolether, einen Acylpolyglycolether, ein Alkylaminoxid oder einen Fettsäureester von einem Polyalkohol handelt.

16. Paste nach einem der Ansprüche 12 oder 15, dadurch gekennzeichnet, daß der Gesamtgehalt an nichtionischem Netzmittel zwischen 0,1 Gew.-% und 1,0 Gew.-%, bezogen auf die Menge des Fluorthermoplasten, liegt.

17. Paste nach einem der Ansprüche 12 bis 16, dadurch gekennzeichnet, daß es sich bei den Fluorthermoplasten um PTFE, PFA, FEP, ETFE oder um Gemische, die aus diesen Polymeren zusammengesetzt sind, handelt.

18. Paste nach einem der Ansprüche 12 bis 17, dadurch gekennzeichnet, daß es sich bei den Füllstoffen um Molybdändisulfid, Blei, Bleioxid, Graphit, Koks, Ruß, Bronze, Kunststoffe, Faserstoffe oder um Gemische dieser Materialien handelt.

19. Paste nach einem der Ansprüche 12 bis 18, dadurch gekennzeichnet, daß die Füllstoffe in einer Menge von 15 bis 40 Vol.-%, bezogen auf die Menge des Fluorthermoplasten, vorliegen.

## Claims

1. A process for the production of a composite material for sliding bearings wherein for forming the plastics sliding layer a paste produced from a plastics dispersion and fillers is applied directly to a sintered porous metal layer, characterised in that
a paste which is free from organic solvents is employed, for the production of which a non-ionic wetting agent is used, wherein the plastics sliding layer is of a thickness of ≤ 30 µm.

2. A process according to claim 1 characterised in that to produce the paste a dispersion which contains up to 60% by weight of a fluorothermoplastic material mixed with an ionic wetting agent, and water, is mixed with 5 - 50% by volume of filler with respect to the volume of the fluorothermoplastic material and with 0.1 to 1.5% by weight of the non-ionic wetting agent with respect to the amount of the fluorothermoplastic material, and an excess of water, precipitation is then effected with a precipitating agent and the supernatent water is removed, the paste is then applied to the sintered porous metal layer which covers a support metal, and then the multi-layer material is sintered.

3. A process according to claim 2 characterised in that the fluorothermoplastic material is mixed with an ionic wetting agent in a proportion of from 1 to 5% by weight with respect to the amount of the fluorothermoplastic material.

4. A process according to one of claims 1 to 3 characterised in that the fluorothermoplastic material used is PTFE, PFA, FEP, ETFE or a mixture which is made up of those polymers.

5. A process according to one of claims 1 to 4 characterised in that the non-ionic wetting agent used is an alkyl polyglycol ether, an alkylaryl polyglycol ether, an acyl polyglycol ether, an alkyl aminooxide or a fatty acid ester of a polyhydric alcohol.

6. A process according to one of claims 1 to 5 characterised in that the proportion of non-ionic wetting agent is between 0.1% by weight and 1.0% by weight with respect to the amount of fluorothermoplastic material.

7. A process according to one of claims 1 to 6 characterised in that the fillers used are molybdenum disulphide, lead, lead oxide, graphite, coke, soot, bronze, plastics materials, fibrous materials or a mixture of said materials.

8. A process according to one of claims 1 to 7 characterised in that the fillers are added in an amount of from 15 to 40% by volume with respect to the volume of the fluorothermoplastic material.

9. A process according to one of claims 1 to 8 characterised in that the support metals used are steel, bronze or aluminium.

10. A process according to one of claims 1 to 9 characterised in that bronze is used for the porous metal.

11. Use of a composite material which is produced according to one of claims 1 to 10 in shock absorbers and gear pumps.

12. A paste which is free from organic solvents for the production of a plastics sliding layer for sliding bearings characterised in that it contains a non-ionic wetting agent.

13. A paste according to claim 12 characterised in that it contains a fluorothermoplastic material mixed with an ionic wetting agent, filler in a proportion of 5 - 50% by volume with respect to the volume of the fluorothermoplastic material and the non-ionic wetting agent in a proportion of from 0.1 to 1.5% by weight with respect to the amount of the fluorothermoplastic material.

14. A paste according to claim 13 characterised in that the fluorothermoplastic material is mixed with from 1 to 5% by weight of ionic wetting agent with respect to the amount of the fluorothermoplastic material.

15. A paste according to one of claims 12 to 14 characterised in that the non-ionic wetting agent is an alkyl polyglycol ether, an alkylaryl polyglycol ether, an acyl polyglycol ether, an alkyl aminooxide or a fatty acid ester of a polyhydric alcohol.

16. A paste according to one of claims 12 or 15 characterised in that the total content of non-ionic wetting agent is between 0.1% by weight and 1.0% by weight with respect to the amount of the fluorothermoplastic material.

17. A paste according to one of claims 12 to 16 characterised in that the fluorothermoplastic material is PTFE, PFA, FEP, ETFE or a mixture which is composed of said polymers.

18. A paste according to one of claims 12 to 17 characterised in that the fillers are molybdenum disulphide, lead, lead oxide, graphite, coke, soot, bronze, plastics materials, fibrous materials or a mixture of said materials.

19. A paste according to one of claims 12 to 18 characterised in that the fillers are present in an amount of from 15 to 40% by weight with respect to the amount of the fluorothermoplastic material.

## Revendications

1. Procédé de production d'un matériau composite pour paliers lisses,
dans lequel, pour la fabrication de la couche plastique de glissement, une pâte fabriquée à partir d'une dispersion de matériau synthétique et de matériaux de charge est directement appliquée sur une couche métallique poreuse frittée, caractérisé en ce que
l'on utilise une pâte exempte de solvants organiques, pour la fabrication de laquelle est employé un agent mouillant non ionique, la couche plastique de glissement présentant une épaisseur inférieure ou égale à 30 µm.

2. Procédé selon la revendication 1, caractérisé en ce que, pour la fabrication de la pâte, on mélange une dispersion, qui contient jusqu'à 60 % en masse d'un matériau thermoplastique fluoré mélangé à un agent mouillant ionique et de l'eau, avec 5 à 50 % en volume de matériau de charge, sur la base du volume du matériau thermoplastique fluoré, avec 0,1 à 1,5 % en masse de l'agent mouillant non ionique, sur la base de la quantité du matériau thermoplastique fluoré, et avec un excès d'eau, on précipite avec un agent de précipitation et on élimine l'eau en excès, la pâle est ensuite appliquée sur la couche métallique poreuse frittée, qui recouvre un métal de support, puis le matériau stratifié est fritté.

3. Procédé selon la revendication 2, caractérisé en ce que le matériau thermoplastique fluoré est mélangé avec un agent mouillant ionique selon 1 à 5 % en masse, sur la base de la quantité du matériau thermoplastique fluoré.

4. Procédé selon l'une des revendications 1 à 3, caractérisé en ce que l'on utilise en tant que matériau thermoplastique fluoré du PTFE, du PFA, du FEP, de l'ETFE, ou un mélange qui se compose de ces polymères.

5. Procédé selon l'une des revendications 1 à 4, caractérisé en ce que l'on utilise en tant qu'agent mouillant non ionique un polyglycoléther d'alkyle, un polyglycoléther d'alkylaryle, un polyglycoléther d'acyle, un alkylaminoxyde ou un ester d'acide gras d'un polyol.

6. Procédé selon l'une des revendications 1 à 5, caractérisé en ce que la proportion d'agent mouillant non ionique est comprise entre 0,1 % en masse et 1,0 % en masse, sur la base de la quantité du matériau thermoplastique fluoré.

7. Procédé selon l'une des revendications 1 à 6, caractérisé en ce que l'on utilise comme matériaux de charge du bisulfure de molybdène, du plomb, de l'oxyde de plomb, du graphite, du coke, de la suie, du bronze, des matériaux synthétiques, des matières fibreuses ou un mélange des matériaux susnommés.

8. Procédé selon l'une des revendications 1 à 7, caractérisé en ce que les matériaux de charge sont ajoutés dans une quantité comprise entre 15 et 40 % en volume, sur la base du volume du matériau thermoplastique fluoré.

9. Procédé selon l'une des revendications 1 à 8, caractérisé en ce que l'on utilise en tant que métaux de support de l'acier, du bronze ou de l'aluminium.

10. Procédé selon l'une des revendications 1 à 9, caractérisé en ce que l'on utilise du bronze pour le métal poreux.

11. Utilisation d'un matériau composite fabriqué en accord avec l'une des revendications 1 à 10 dans des amortisseurs et des pompes à engrenages.

12. Pâte exempte de solvants organiques pour la production d'une couche plastique de glissement pour paliers lisses, caractérisée en ce qu'elle renferme un agent mouillant non ionique.

13. Pâte selon la revendication 12, caractérisée en ce qu'elle contient un matériau thermoplastique fluoré mélangé à un agent mouillant ionique, un matériau de charge dans une proportion comprise entre 5 et 50 % en volume, sur la base du volume du matériau thermoplastique fluoré, et l'agent mouillant non ionique dans une proportion comprise entre 0,1 et 1,5 % en masse, sur la base de la quantité du matériau thermoplastique fluoré.

14. Pâte selon la revendication 13, caractérisée en ce que le matériau thermoplastique fluoré est mélangé avec 1 à 5 % en masse d'agent mouillant ionique, sur la base de la quantité du matériau thermoplastique fluoré.

15. Pâte selon l'une des revendications 12 à 14, caractérisée en ce que l'agent mouillant non ionique est un polyglycoléther d'alkyle, un polyglycoléther d'alkylaryle, un polyglycoléther d'acyle, un alkylaminoxyde ou un ester d'acide gras d'un polyol.

16. Pâte selon l'une des revendications 12 à 15, caractérisée en ce que la teneur totale en agent mouillant non ionique est comprise entre 0,1 % en masse et 1,0 % en masse, sur la base de la quantité du matériau thermoplastique fluoré.

17. Pâte selon l'une des revendications 12 à 16, caractérisée en ce que le matériau thermoplastique fluoré est du PTFE, du PFA, du FEP, de l'ETFE, ou un mélange qui se compose de ces polymères.

18. Pâte selon l'une des revendications 12 à 17, caractérisée en ce que les matériaux de charge sont du bisulfure de molybdène, du plomb, de l'oxyde de plomb, du graphite, du coke, de la suie, du bronze, des matériaux synthétiques, des matières fibreuses ou un mélange de ces matériaux.

19. Pâte selon l'une des revendications 12 à 18, caractérisée en ce que les matériaux de charge sont présents dans une quantité comprise entre 15 et 40 % en volume, sur la base de la quantité du matériau thermoplastique fluoré.
